# EUROPEAN PATENT APPLICATION

(11) **EP 4 685 000 A1**
(43) Date of publication of application: **28.01.2026**
(21) Application number: 24306237.9
(22) Date of filing: 23.07.2024
(51) Int. Cl.: B60L 5/24, B60L 9/04, B60L 9/08, B60L 9/14, B60L 50/53

(54) **SYSTEM FOR MANAGING TRACTION POWER ONBOARD OF A RAILWAY VEHICLE, AND RAILWAY VEHICLE COMPRISING SUCH A SYSTEM**

(71) Applicant: ALSTOM Holdings, 93400 Saint-Ouen-sur-Seine (FR)
(72) Inventor: MANEIRO, José, 65360 ALLIER (FR); SOEFFKER, Carsten, 38321 DENKTE (DE)
(74) Representative: Plasseraud IP

(57) **Abstract**

System (100) for managing power suitable to feed an onboard traction system of a railway vehicle, comprising:
- a DC traction bus (1) for transmitting DC power to a traction drive (200) of the railway vehicle;
- a DC power generating system (2) providing DC power;
- a first power collector (3) collecting AC power from an AC power feeding line (202), a power transformer (4) which receives AC power from the first power collector, an AC/DC conversion stage (5) connected to the power transformer and converting the collected AC power received via the power transformer into DC power;
- a DC/DC conversion stage (10) connected to the traction bus. The DC/DC conversion stage is switchable between a first configuration where it is connected to and receives in input DC power, to be output to the traction bus, from the DC power generating system or from an offboard DC power feeding line, and a second configuration where it is connected to and receives in input DC power, to be output to the traction bus, from the AC/DC conversion stage.

## Description

The present invention relates to a system for managing power suitable to feed at least the onboard traction system of a railway vehicle, and to a railway vehicle comprising such power managing system.

With the definition of railway vehicle it has to be understood hereby any suitable type of railway vehicle, e.g. a train, composed by any number of units, which can be fed electrically.

As known, in the field of railway transportation, over the years there have developed various solutions for providing trains with the power needed for the functioning of the traction systems and additionally of all other onboard loads.

To this end, for example there have been developed solutions where new types of power generating systems, such as fuel cells, have been installed onboard of trains.

These onboard power generating sources can be used alone in powering trains, or in conjunction with more traditional power sources, such as external catenary lines, thus leading to hybrid power feeding systems.

Although such hybrid power feeding systems offer substantial benefits over conventional solutions, for example in terms of higher efficiency, more flexibility in applications, lower emissions, they still present some aspects worth of further improvements, in particular as regard to the complexity, size, cost and total weight of the various power components needed for transferring feeding power from the available sources to the traction system, and especially of the AC to DC conversion stages.

Hence, the present invention is aimed at providing a power managing system which at least mitigates one or more of such issues.

Accordingly, the present invention provides a system for managing power suitable to feed at least the onboard traction system of a railway vehicle, the system comprising, suitable to be mounted onboard of the railway vehicle, at least:
- a DC traction bus configured to transmit DC feed power to at least one traction drive of the railway vehicle;
- a DC power generating system configured to provide DC power;
- a first power collector which is suitable to collect AC power from an AC power feeding line, a power transformer which is suitable to be connected to and receives AC power from the first power collector, and an AC/DC conversion stage which is connected to the power transformer and is configured to convert the collected AC power received via the power transformer into DC power;
- at least one DC/DC conversion stage whose output is connected to the traction bus, wherein said at least one DC/DC conversion stage is configured to be switched at least between a first operative configuration where it is electrically connected to and receives in input DC power, to be output to said DC traction bus, from the DC power generating system or from an offboard DC power feeding line, and a second operative configuration where it is electrically connected to and receives in input DC power, to be output to said DC traction bus, from the AC/DC conversion stage.

According to some embodiments, the system for managing power suitable to feed at least the onboard traction system of a railway vehicle according to the invention may comprise one or more of the following features, which may be combined in any technical feasible combination:
- the AC/DC conversion stage is configured to transmit power unidirectionally from the power transformer to the at least one DC/DC conversion stage;
- the AC/DC conversion stage comprises at least one rectifier comprising or constituted by one or more diodes;
- the at least one DC/DC conversion stage comprises at least one DC/DC converter;
- the at least one DC/DC conversion stage comprises at least one switching device for switching the connection in input to the DC/DC conversion stage, between said first operative configuration and said second operative configuration;
- the AC/DC conversion stage comprises one rectifier, and wherein the at least one DC/DC conversion stage comprises a plurality of DC/DC converters which are connected in parallel to the one rectifier;
- wherein the power transformer comprises a primary winding and a plurality of secondary windings, wherein the AC/DC conversion stage comprises a plurality of rectifiers each comprising one or more diodes and being connected to a respective secondary winding, and wherein the at least one DC/DC conversion stage comprises a plurality of DC/DC converters each connected in series with a respective rectifier;
- the DC power generating system comprises one or more fuel cells;
- the system further comprises a rechargeable DC energy storage system configured to receive and store DC power from the at least one DC/DC conversion stage via the DC traction bus;
- the rechargeable DC energy storage system is configured to receive and store electric braking power provided by the at least one traction drive via the DC traction bus;
- the rechargeable DC energy storage system is configured to supply power to one or more of the traction drive, one or more loads onboard the railway vehicle, and to reinject power in the AC or DC system, via the DC bus;
- the rechargeable DC energy storage system comprises one or more batteries;
- the rechargeable DC energy storage system comprises at least one supercapacitor;
- the rechargeable DC energy storage system comprises at least one flywheel;

The above-mentioned aim of the present invention is also achieved by a railway vehicle, notably a train, according to claim 15.

Further characteristics and advantages will become apparent from the description of some preferred but not exclusive exemplary embodiments of a system for managing power suitable to feed at least the onboard traction system of a railway vehicle according to the present invention, illustrated only by way of non-limitative examples with the accompanying drawings, wherein:
figure 1 is a functional block diagram schematically illustrating a system for managing power suitable to feed at least the onboard traction system of a railway vehicle, according to the present invention;
figures 2 and 3 are functional blocks schematically illustrating two possible embodiments of part of the system illustrated in figure 1.

It should be noted that in the detailed description that follows, identical or similar components, either from a structural and/or functional point of view, may have the same or different reference numerals, regardless of whether they are shown in different embodiments of the present disclosure.

It should also be noted that in order to clearly and concisely describe the present disclosure, the drawings may not necessarily be to scale and certain features of the disclosure may be shown in somewhat schematic form.

Further, when the term "configured", or "adapted", or a similar term is used herein while referring to any component as a whole, or to any part of a component, or to a combination of components, it has to be understood that it means and encompasses correspondingly either the structure, and/or the configuration and/or the form and/or the positioning.

In particular, for electronic and/or software means, each of the above listed terms means and encompasses electronic circuits or parts thereof, as well as stored, embedded or running software codes and/or routines, algorithms, or complete programs, suitably designed for achieving the technical result and/or the functional performances for which such means are devised.

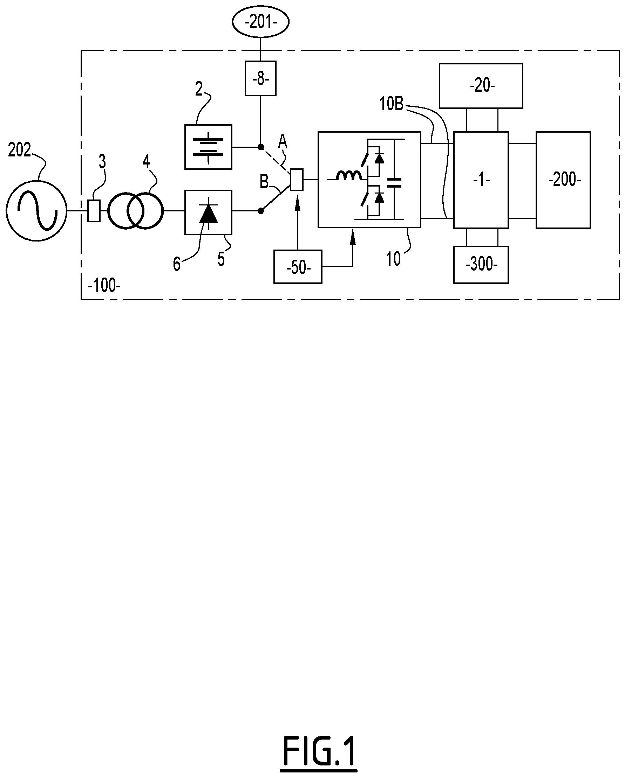

Figure 1 illustrates schematically a system, indicated by the overall reference number 100, for managing power suitable to feed at least the onboard traction system of a railway vehicle, such as a train.

Further, in figure 1 there is also schematically represented a traction drive of the railway vehicle, indicated by the reference number 200.

Clearly, the traction system of the railway vehicle can comprise other traction drives and components, according to solutions well known in the art and therefore not described herein in details.

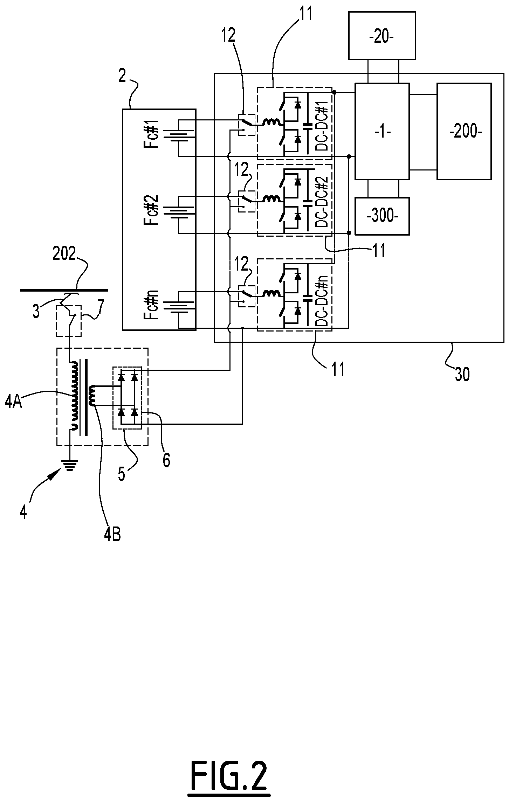

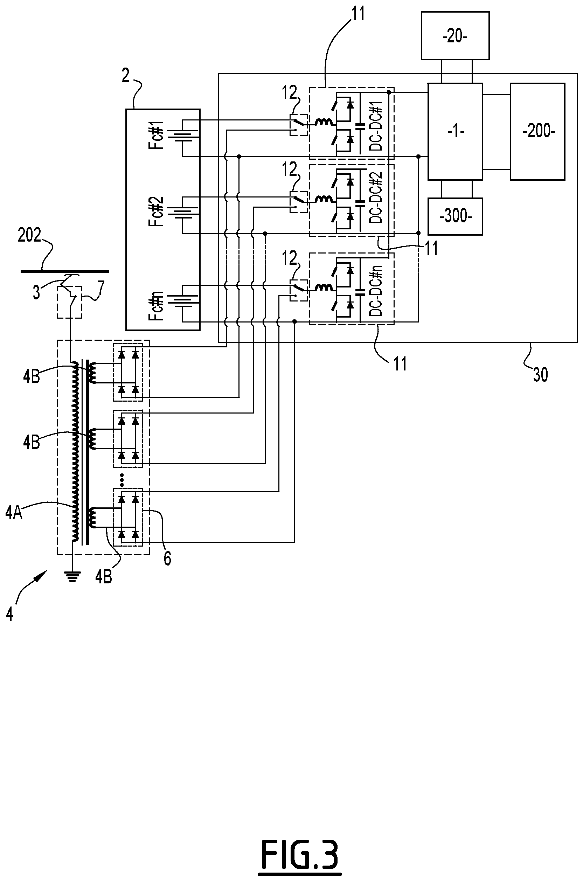

As illustrated, the power managing system 100 comprises, suitable to be mounted onboard of the railway vehicle, at least the following components:
- a direct current (hereinafter "DC") traction bus 1, which is configured to transmit DC feeding power to the traction system of the railway vehicle, e.g. at least to the traction drive 200;
- a DC power generating system 2, which is configured to provide DC feeding power, for example for the DC traction bus 1;
- at least a first power collector 3, e.g. a pantograph, as schematically represented in figures 2 and 3, which is suitable to collect AC power from an off-board (i.e. external to the railway vehicle) alternate current ('hereinafter "AC") power feeding line 202;
- a power transformer 4 which is suitable to be connected to and receives AC power from the first power collector 3. Usually between the power transformer and the first power collector 3 there is provided at least one current interruption device, e.g. a circuit breaker 7;
- an AC/DC conversion stage 5 which is connected to the power transformer 4 and is configured to convert the AC power, collected by the first power collector 3 and received via the power transformer 4, into DC power; and
- at least one DC/DC conversion stage 10 whose output 10B is connected to the traction bus 1.

Conveniently, in the power managing system 100 according to the invention, the at least one DC/DC conversion stage 10 is configured to be switched at least between:
- a first operative configuration (schematically represented in figure 1 by the dotted line A) where the at least one DC/DC conversion stage 10 is electrically connected to and receives, at its input 10A, DC power to be output to the DC traction bus 1, from the DC power generating system 2 or from an offboard DC power feeding line 201;
- or alternatively, in a second operative configuration (schematically represented in figure 1 by the continuous line B) where the at least one DC/DC conversion stage 10 is electrically connected to and receives in input DC power, to be output to the DC traction bus 1, from the AC/DC conversion stage 5.

In practice, in the system 100, the at least one DC/DC conversion stage 10 is usefully arranged to have a dual purpose, namely:
- in the first configuration it receives power from the onboard DC power generating system 2 or alternatively from a DC power source 201 external to the railway vehicle, and transfers, at the suitable voltage level(s), the received DC power to the DC bus 1;
- in the second configuration, it receives the power provided by the external AC power feeding line 202, typically an AC catenary, via the power collector 3, the transformer 4 and the AC/DC conversion stage 5, and transfers, at the suitable voltage level(s), the received DC power to the DC bus 1.

The commutations of the at least one DC/DC conversion stage 10 between the first and second configurations can be executed under the control of an onboard controller, schematically represented in figure 1 by the reference number 50.

This controller 50 may be configured to control operations/functioning of all components of at least the system 100.

For example, the controller 50 can constituted by, or comprise, any suitable processor-based device, e.g. a processor of a type commercially available, suitably programmed and provided to the extent necessary with circuitry, in order to perform the innovative functionalities devised for the system 100 according to the present invention.

The DC power source external to the railway vehicle, and that can be exploited in the first configuration as a source alternative to the onboard power generating system 2, can be for instance a DC catenary, or a third rail, schematically represented in figure 1 by the reference number 201.

In such a case, the DC power can be collected for example by means of one or more second power collectors, which can be of different type depending on the type of external DC power source, e.g. collector shoes, schematically represented in figure 1 by the reference number 8.

In one possible embodiment, the DC power generating system 2 comprises one or more fuel cells.

According to a possible embodiment, the system 100 usefully further comprises an onboard rechargeable DC energy storage system 20.

In particular, the rechargeable DC energy storage system 20 is configured to receive and store DC power from the DC/DC conversion stage 10 and the DC traction bus 1.

Usefully, the rechargeable DC energy storage system 20 is configured to receive and store electric braking power provided by the at least one traction drive 200 on the DC traction bus 1.

According to some possible embodiments, the rechargeable DC energy storage system 20 is configured to supply power to one or more of the traction drive 200, one or more loads 300 onboard the railway vehicle, and to reinject power in the AC or DC system, via the DC bus 1.

According to possible embodiments, the rechargeable DC energy storage system 20 comprises one or more batteries, or at least one supercapacitor, or at least one flywheel, or a combination of two or more of such devices.

In one possible embodiment, the AC/DC conversion stage 5 is conveniently configured to transmit power unidirectionally from the power transformer 4 to the at least one DC/DC conversion stage 10.

In particular, the AC/DC conversion stage 5 comprises at least one rectifier 6, e.g. a passive diode-based rectifier, which comprises or is constituted by one or more diodes to form a bridge.

In one possible embodiment, the at least one DC/DC conversion stage 10 comprises at least one DC/DC converter 11.

According to a possible embodiment, the at least one DC/DC conversion stage 10 comprises at least one switching device 12 for switching the connection in input to the DC/DC conversion stage 10, between the first operative configuration and the second operative configuration.

In particular, according to one possible embodiment illustrated in figure 2, the power transformer 4 comprises a primary winding 4A and one secondary winding 4B, the AC/DC conversion stage 5 comprises one rectifier 6, and the at least one DC/DC conversion stage 10 comprises a plurality of DC/DC converters 11 which are connected in parallel to the one rectifier 6.

According to one possible embodiment illustrated in figure 3, the power transformer 4 comprises a primary winding 4A and a plurality of secondary windings 4B.

In this case, the AC/DC conversion stage 5 comprises a plurality of rectifiers 6, each rectifier being connected to a respective secondary winding 4B, and the DC/DC conversion stage 10 comprises a plurality of DC/DC converters 11, wherein each DC/DC converter is connected in series with a respective rectifier 6.

In the embodiments of figures 2 and 3, each of the DC/DC converters 11 is associated with a respective switching device 12, and all switching devices 12 can be actuated by the controller 50 for switching the connection in input between the first operative configuration and the second operative configuration.

Further, in the embodiments of figures 2 and 3, for the sake of simplicity, there is illustrated only the DC power generating system 2 in the form of a fuel cell system.

Clearly, also in these embodiments, in the first operative configuration, the at least one DC/DC conversion stage 10 can be connected to and receives power from an external DC power source.

Hence, it is evident from the foregoing description that the power managing system 100 according to the present invention allows achieving the intended aim since it allows to realize a simplified, optimized, efficient and economic convenient power management architecture where different sources of power, either onboard or external to the railway vehicle can be alternatively exploited.

Indeed, for example when a train is running using an on board DC power generating source 2, e.g. a fuel-cell system, and a track section of the railway line where an external AC catenary 202 is approaching, the power output of the fuel cell system 2 is reduced to zero, for example under the driving command of the controller 50, and the commutation of the DC-DC converter(s) of the conversion stage 10 is halted. The reconfiguration switching device(s) 12 is/are operated, and the input of the DC-DC conversion stage 10 is reconfigured to be in series with the AC/DC conversion stage diode rectifier(s) 6. When the AC catenary is available, the main train circuit breaker 7 is closed connecting the power transformer 4, and then the DC-DC converter(s) of the conversion stage are electrically connected, converter(s) operation re-starts actively regulating the power flow coming from the external AC catenary 202. During the whole reconfiguration process, the energy storage system 20 may ensure that no power disruption to the traction drive 200 occurs.

When instead a train is for instance running exploiting the power provided by an external AC catenary line 202 and a non-electrified track section of the railway line approaches, the controller 50 reduces the power from the catenary down to zero. The circuit breaker 7 is open, disconnecting the transformer input from the catenary 202. The reconfiguration switch devices 12 are operated, and the inputs of the DC-DC converter(s) of the conversion stage 10 is connected to the DC onboard power generating source, e.g. to output of the fuel-cell system 2. The DC-DC conversion stage 10 changes to fuel-cell power control mode, converter(s) operation re-starts, and the fuel cell system starts feeding power which is conveyed at the suitable voltage level(s) to the DC bus 1 for transmission to the traction drive 200. Also in this case, during the whole reconfiguration process, the energy storage system 20 may ensure no power disruption to the traction drive 200 occurs.

The system 100 achieve also some other beneficial technical effects.

For example, the use of several paralleled unitary DC-DC converters allows increasing power rating from a DC supply or an AC catenary proportionally to the number of unitary converters that are paralleled. Further, it allows for the interleaved/interlaced operation of the paralleled DC-DC unitary converters to obtain a frequency multiplication effect. This improves the harmonic content of the transformer/catenary AC current. The resulting harmonic families are shifted to higher frequencies by a factor proportional to the number of unitary converters that are paralleled. The effect is a reduction of the transformer losses and a reduction of the total harmonic content of the catenary current.

The use of the rectifier(s) 6 in series with the DC/DC converter(s) forms an optimal boost rectifier scheme. This scheme allows for unidirectional power to be drawn from the catenary and to achieve a 1:1 power ratio without any additional power modules other than the uncontrolled diode-based rectifier(s) 6. The onboard DC energy storage system 20 can be correctly sized and allows for the braking power to be fully recovered for recharging. This avoids the need for regeneration to the catenary, making this unidirectional conversion scheme a feasible and optimal solution from an energy efficiency and cost perspective.

The onboard energy storage system 20 can be used, in addition to recovering of braking power (fully or partially), for power boost during acceleration of the associated railway vehicle (peak power shaving). This allows to reduce the peak power constrains from the catenary line and, through the traction transformer, or the fuel-cell system, resulting in a more constant power profile. The catenary line or fuel-cell system only need to provide in this way the average traction power for the railway vehicle, which allows optimizing its design, reducing losses and thermal cycling, allowing for a more compact and cheaper design, and extending the lifetime of the transformer, DC-DC converters and fuel cells.

The AC/DC conversion stage 5 can be installed outside the traction case provided onboard of the railway vehicle, schematically represented in figures 2 and 3 by the box 30, thus freeing space for other components or allowing a more compact design.

The system 100 thus conceived is susceptible of modifications and variations, all of which are within the scope of the inventive concept as defined in particular by the appended claims.

For example, in addition to the traction system, other onboard loads of the railway vehicle, schematically represented in figure 1 by the box 300, can be supplied with the power provided by the rechargeable DC energy storage system 20, and/or also with the power provided by the onboard DC source, or by the external DC source, or by the external AC catenary.

For instance, according to some possible embodiments, each of the DC-DC converters can be any suitable type of DC-DC converter circuit, e.g. bi-directional or unidirectional, non-isolated or isolated, two-level or multilevel.

The semiconductor technology can be any suitable silicon or wide-bandgap material based alternative semiconductor. The use of wide-bandgap devices allows further increasing the DC-DC converter switching frequency, thus resulting in the same advantages as the use of multilevel converters with respect to the harmonic content of AC current.

The onboard DC energy storage system 20 can be connected to the traction DC bus 1 with or without an interface electronic converter.

All the details may furthermore be replaced with technically equivalent elements.

## Claims

1. A system (100) for managing power suitable to feed at least an onboard traction system of a railway vehicle, the system (100) comprising, suitable to be mounted onboard of the railway vehicle, at least:
- a DC traction bus (1) configured to transmit DC feed power to at least one traction drive (200) of the railway vehicle;
- a DC power generating system (2) configured to provide DC power;
- a first power collector (3) which is suitable to collect AC power from an AC power feeding line (202), a power transformer (4) which is suitable to be connected to and receives AC power from the first power collector (3), and an AC/DC conversion stage (5) which is connected to the power transformer (4) and is configured to convert the collected AC power received via the power transformer (4) into DC power;
- at least one DC/DC conversion stage (10) whose output is connected to the traction bus (1), wherein said at least one DC/DC conversion stage (10) is configured to be switched at least between a first operative configuration where it is electrically connected to and receives in input DC power, to be output to said DC traction bus (1), from the DC power generating system (2) or from an offboard DC power feeding line, and a second operative configuration where it is electrically connected to and receives in input DC power, to be output to said DC traction bus (1), from the AC/DC conversion stage (5).

2. The system (100) according to claim 1, wherein the AC/DC conversion stage (5) is configured to transmit power unidirectionally from the power transformer (4) to the at least one DC/DC conversion stage (10).

3. The system (100) according to claim 1 or 2, wherein the AC/DC conversion stage (5) comprises at least one rectifier (6) comprising or constituted by one or more diodes.

4. The system (100) according to one or more of the previous claims, wherein the at least one DC/DC conversion stage (10) comprises at least one DC/DC converter (11).

5. The system (100) according to one or more of the previous claims, wherein the at least one DC/DC conversion stage (10) comprises at least one switching device (12) for switching the connection in input to the DC/DC conversion stage (10), between said first operative configuration and said second operative configuration.

6. The system (100) according to one or more of the previous claims, wherein the AC/DC conversion stage (5) comprises one rectifier (6), and wherein the at least one DC/DC conversion stage (10) comprises a plurality of DC/DC converters (11) which are connected in parallel to the one rectifier (6).

7. The system (100) according to one or more of claims 1 to 5, wherein the power transformer (4) comprises a primary winding (4A) and a plurality of secondary windings (4B), wherein the AC/DC conversion stage (5) comprises a plurality of rectifiers (6) each comprising one or more diodes and being connected to a respective secondary winding (4B), and wherein the at least one DC/DC conversion stage (10) comprises a plurality of DC/DC converters (11) each connected in series with a respective rectifier (6).

8. The system (100) according to one or more of the previous claims, wherein the DC power generating system (2) comprises one or more fuel cells.

9. The system (100) according to one or more of the previous claims, wherein it further comprises a rechargeable DC energy storage system (20) configured to receive and store DC power from the at least one DC/DC conversion stage (10) via the DC traction bus (1).

10. The system (100) according to claim 9, wherein the rechargeable DC energy storage system (20) is configured to receive and store electric braking power provided by the at least one traction drive (200) via the DC traction bus (1).

11. The system (100) according to one or more of claims 9 and 10, wherein the rechargeable DC energy storage system (20) is configured to supply power to one or more of the traction drive (200), one or more loads (300) onboard the railway vehicle, and to reinject power in the AC or DC system, via the DC bus (1).

12. The system (100) according to one or more of claims 9 to 11, wherein the rechargeable DC energy storage system (20) comprises one or more batteries.

13. The system (100) according to one or more of claims 9 to 11, wherein the rechargeable DC energy storage system (20) comprises at least one supercapacitor.

14. The system (100) according to one or more of claims 9 to 11, wherein the rechargeable DC energy storage system (20) comprises at least one flywheel.

15. A railway vehicle comprising a power managing system (100) according to one or more of the previous claims.
